(19) Europäisches Patentamt / European Patent Office / Office européen des brevets

(11) **EP 3 365 937 B1**

(12) # FASCICULE DE BREVET EUROPEEN


(45) Date de publication et mention de la délivrance du brevet:
**19.10.2022 Bulletin 2022/42**

(21) Numéro de dépôt: **16782289.9**

(22) Date de dépôt: **19.10.2016**

(51) Classification Internationale des Brevets (IPC):
***H01M 10/054*** *(2010.01)* ***H01M 4/04*** *(2006.01)*

(52) Classification Coopérative des Brevets (CPC):
**H01M 4/0445; H01M 4/0452; H01M 10/054;**
H01M 4/0402; Y02E 60/10; Y02P 70/50

(86) Numéro de dépôt international:
**PCT/EP2016/075111**

(87) Numéro de publication internationale:
**WO 2017/067994 (27.04.2017 Gazette 2017/17)**


(54) **PROCÉDÉ DE FABRICATION D'UN ACCUMULATEUR DU TYPE SODIUM-ION**

VERFAHREN ZUR HERSTELLUNG EINER NATRIUM-IONEN-BATTERIEN

METHOD FOR PRODUCING A SODIUM-ION BATTERY


(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.10.2015 FR 1560049**

(43) Date de publication de la demande:
**29.08.2018 Bulletin 2018/35**



(73) Titulaire: **Commissariat à l'Energie Atomique et aux Energies Alternatives**
**75015 Paris (FR)**

(72) Inventeurs:
- **CHATILLON, Yohann**
**38600 Fontaine (FR)**
- **MARTIN, Nelly**
**38380 Miribel Les Echelles (FR)**

(74) Mandataire: **Brevalex**
**95, rue d'Amsterdam**
**75378 Paris Cedex 8 (FR)**



(56) Documents cités:
**WO-A1-2011/157958** **WO-A1-2015/125840**
**CN-A- 104 037 418** **US-A1- 2012 015 256**

- **LUYUAN PAUL WANG ET AL: "Recent developments in electrode materials for sodium-ion batteries", JOURNAL OF MATERIALS CHEMISTRY A: MATERIALS FOR ENERGY AND SUSTAINABILITY, vol. 3, no. 18, 3 mars 2015 (2015-03-03), pages 9353-9378, XP055327185, GB ISSN: 2050-7488, DOI: 10.1039/C4TA06467D**


EP 3 365 937 B1


Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

## DOMAINE TECHNIQUE

La présente invention a trait à un procédé de fabrication d'un accumulateur du type sodium-ion.

Les accumulateurs de ces types ont pour vocation d'être de plus en plus utilisés comme source d'énergie autonome, en particulier, dans les équipements électroniques portables (tels que les téléphones mobiles, les ordinateurs portables, l'outillage), afin de remplacer progressivement les accumulateurs nickel-cadmium (NiCd) et nickel-hydrure métallique (NiMH) ou lithium-ion. Ils peuvent également servir à fournir l'alimentation en énergie nécessaire aux nouvelles microapplications, telles que les cartes à puce, les capteurs ou autres systèmes électromécaniques.

Du point de vue de leur fonctionnement, les accumulateurs de type sodium-ion fonctionnent selon le principe d'insertion-désinsertion de l'ion sodium.

Lors de la décharge de l'accumulateur, le sodium désinséré de l'électrode négative sous forme ionique $Na^+$ migre à travers l'électrolyte conducteur ionique et vient s'intercaler dans le réseau cristallin du matériau actif de l'électrode positive. Le passage de chaque ion $Na^+$ dans le circuit interne de l'accumulateur est exactement compensé par le passage d'un électron dans le circuit externe, générant ainsi un courant électrique.

En revanche, lors de la charge de l'accumulateur, les réactions se produisant au sein de l'accumulateur sont les réactions inverses de la décharge, à savoir que :

- l'électrode négative va insérer du sodium dans le réseau du matériau d'insertion la constituant ;
- l'électrode positive va libérer du sodium, lequel va s'intercaler dans le matériau d'insertion de l'électrode négative.

Lors du premier cycle de charge de l'accumulateur, quand le matériau actif de l'électrode négative est porté à un potentiel d'insertion du sodium, une partie du sodium va réagir avec l'électrolyte à la surface des grains de matériau actif de l'électrode négative pour former une couche de passivation à sa surface. La formation de cette couche de passivation consomme une quantité d'ions sodium non négligeable, ce qui se matérialise par une perte irréversible de capacité de l'accumulateur (cette perte étant qualifiée de capacité irréversible), du fait que les ions sodium ayant réagi ne sont plus disponibles pour les cycles ultérieurs de charge/décharge.

Il convient donc de minimiser, au maximum, cette perte lors de la première charge, afin que la densité d'énergie de l'accumulateur soit la plus élevée possible.

Pour ce faire, il a été proposé, dans l'art antérieur, deux types de techniques pour pallier l'inconvénient susmentionné :

- des techniques de présodiation de l'électrode négative ; ou
- des techniques de sursodiation de l'électrode positive.

Les mêmes problématiques se posent pour les accumulateurs au lithium, pour lesquels il a été proposé des techniques de prélithiation de l'électrode négative et des techniques de surlithiation de l'électrode positive.

Concernant les techniques de prélithiation de l'électrode négative, on peut citer :

- les techniques dites « *in situ* » consistant à déposer sur l'électrode négative du lithium métallique (c'est-à-dire au degré d'oxydation « 0 ») soit sous forme d'une feuille métallique (comme décrit dans WO 1997031401) ou soit sous forme d'une poudre de lithium métallique stabilisée par une couche protectrice (comme décrit dans Electrochemistry Communications 13 (2011) 664-667) mélangée avec l'encre comprenant les ingrédients de l'électrode négative (à savoir, le matériau actif, les conducteurs électroniques et un liant organique), l'insertion de lithium se faisant, indépendamment de l'alternative retenue, de manière spontanée par un phénomène de corrosion ;
- les techniques dites « *ex* situ » consistant à prélithier électrochimiquement l'électrode négative, en plaçant celle-ci dans un montage comportant un bain électrolytique et une contre-électrode comprenant du lithium, ces techniques permettent de contrôler la quantité de lithium introduite dans l'électrode négative mais présentent toutefois l'inconvénient de nécessiter la mise en place d'un montage expérimental lourd.

En variante, il a été également proposé, dans l'art antérieur, des techniques de surlithiation/sursodiation de l'électrode positive, notamment, en ajoutant dans la composition comprenant les ingrédients constitutifs de l'électrode positive, un sel sacrificiel qui, lors de la première charge, va se décomposer et fournir la quantité nécessaire de Li/Na pour former la couche de passivation à la surface de l'électrode négative.

Dans ces techniques, il est à noter que le sel sacrificiel doit pouvoir se décomposer à un potentiel situé dans la fenêtre de potentiel que balaie l'électrode positive lors de la première charge.

Aussi, lorsque la première charge a lieu, lorsque l'on prend pour exemple les accumulateurs au sodium deux

réactions électrochimiques simultanées génèrent des ions $Li^+/Na^+$, qui sont la désinsertion de lithium ou sodium de l'électrode positive et la décomposition du sel sacrificiel.

Ces techniques sont notamment décrites dans le document US 2013/298386, qui précise que le sel sacrificiel est introduit directement dans l'encre comprenant les ingrédients de l'électrode positive, à savoir le matériau actif, le conducteur électronique, le liant organique, l'encre étant ensuite déposée sur un substrat collecteur de courant pour former l'électrode positive, moyennant quoi le sel sacrificiel se trouve réparti, de manière aléatoire, dans l'électrode positive.

Ces techniques présentent un certain nombre d'inconvénients, car la décomposition du sel sacrificiel peut engendrer plusieurs phénomènes :

- l'apparition de volumes morts au cœur de l'électrode, en raison de la décomposition du sel, ce qui contribue à l'augmentation de la porosité de l'électrode ; et
- la déconnexion électronique de certaines parties de l'électrode pouvant rendre le matériau actif inutilisable et induisant, ainsi, une perte de capacité de l'accumulateur.

Aussi, au vu de ce qui précède, les auteurs de la présente invention se sont fixé pour objectif de mettre au point un procédé de fabrication d'un accumulateur du type sodium-ion permettant de surmonter les inconvénients susmentionnés.

## EXPOSE DE L'INVENTION

Ainsi, l'invention a trait à un procédé de préparation d'un accumulateur du type sodium-ion comprenant une électrode positive et une électrode négative disposées de part et d'autre d'un électrolyte, ladite électrode positive comprenant, comme matériau actif, un matériau d'insertion du sodium, ledit procédé comprenant les étapes suivantes :

a) une étape de dépôt à la surface de l'électrode positive, avant placement dans l'accumulateur, d'un sel de sodium ;
b) une étape d'assemblage de l'électrode positive, de l'électrode négative et de l'électrolyte ; et
c) une étape de formation d'une couche de passivation à la surface de l'électrode négative avec les ions sodium issus de la décomposition du sel de sodium par application d'une première charge à l'assemblage susmentionné.

En d'autres termes, la première charge est appliquée dans des conditions de potentiel nécessaires pour la décomposition du sel de sodium, cette décomposition se traduisant par une libération d'ions sodium, qui vont contribuer à la formation de la couche de passivation à la surface de l'électrode négative. Du fait que le sel de sodium fournisse les ions sodium nécessaires à la formation de la couche de passivation, on peut ainsi qualifier ce sel de « sel sacrificiel ».

Aussi, les ions sodium nécessaires pour la formation de la couche de passivation ne sont pas issus du matériau actif de l'électrode positive. Les ions sodium du matériau actif de l'électrode positive ne sont donc pas perdus pour la formation de cette couche lors de la première charge et donc la perte de capacité de l'accumulateur s'en trouve amoindrie voire nulle.

Enfin, le fait d'appliquer un sel de sodium à la surface de l'électrode positive contrairement à l'art antérieur, où le sel de sodium est ajouté à la composition précurseur de l'électrode positive, remplit un certain nombre d'avantages.

En particulier, d'une part, à l'issue de la première charge, la couche comprenant le sel de sodium s'est complètement décomposée pour donner les ions $Na^+$ nécessaires à la formation de la couche de passivation sur l'électrode négative, sans que cela ne désorganise la structure interne de l'électrode positive, celle-ci, à l'issue de la première charge, présentant une organisation structurale similaire à celle d'une électrode classique, notamment sans qu'il n'y ait apparition de volume mort et de perte de matériau actif.

D'autre part, contrairement aux modes de réalisation de l'art antérieur, où le sel sacrificiel est introduit directement dans la composition précurseur de l'électrode positive et où il est nécessaire d'inclure une quantité de sel supérieure à celle nécessaire à la formation de la couche de passivation du fait de l'impossibilité de maîtriser le placement des grains de sel dans la structure de l'électrode, le procédé de l'invention donne la possibilité d'utiliser, du fait de la localisation du sel de sodium juste à la surface de l'électrode positive, uniquement la quantité suffisante à la formation de la couche de passivation sur l'électrode négative. Dans ce cas, il n'y a donc pas de sel excédentaire dans l'électrode positive après formation de la couche de passivation et donc de matière inutile dans celle-ci.

Comme mentionné ci-dessus, le procédé de l'invention comporte une étape de traitement de l'électrode positive, avant placement dans un assemblage comprenant l'électrode négative et l'électrolyte, ce dernier pouvant être amené à imprégner un séparateur, ce traitement consistant à déposer sur l'électrode positive (avantageusement, au moins sur la face destinée à être en contact avec l'électrolyte) un sel de sodium, lequel est destiné à participer à la formation de la couche de passivation lors de la première charge de l'assemblage.

Cette étape de dépôt peut être effectuée, en particulier, par une technique de jet d'encre ou d'enduction,

consistant à déposer sur l'électrode positive, une composition comprenant le sel de sodium, ladite composition pouvant être déposée à partir d'une buse.

En particulier, l'étape de dépôt peut être effectuée par voie organique, par exemple, au moyen d'une encre comprenant le sel sacrificiel (par exemple, $NaN_3$), un conducteur électronique (par exemple, du noir de carbone), un liant polymérique (par exemple, du polyfluorure de vinylidène) et éventuellement un solvant organique, par exemple un solvant polaire aprotique, comme un solvant N-méthylpyrrolidone (NMP).

A titre d'exemple de sel de sodium, on peut citer les sels appartenant aux catégories suivantes :

- les azotures de sodium de formules $N_3A$, avec A correspondant à un cation sodium ;
- les cétocarboxylates de sodium, tels que ceux répondant aux formules (II) à (IV) suivantes :

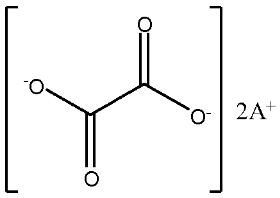

(II)

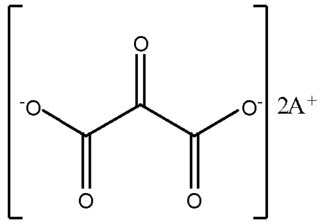

(III)

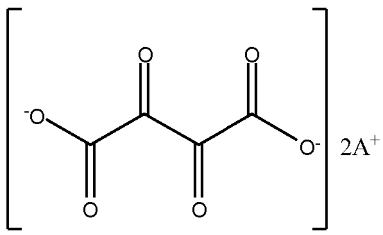

(IV)

avec A correspondant à un cation sodium ;
- les hydrazides de sodium, tels que ceux répondant aux formules (V) et (VI) suivantes :

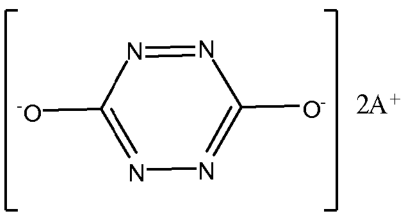

(V)

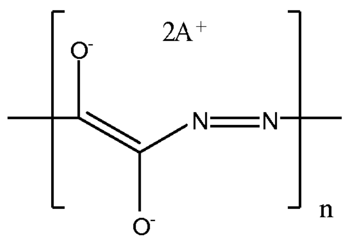

(VI)

avec A correspondant à un cation sodium et n correspondant au nombre de répétition du motif pris entre crochets, ce nombre de répétition pouvant aller de 3 à 1000.

L'électrode positive, sur laquelle est déposé le sel de sodium, comprend, comme matériau actif, un matériau d'insertion du sodium et ce, de manière réversible pour que les processus de charge et de décharge puissent avoir lieu lors du fonctionnement de l'accumulateur.

En effet, par électrode positive, on précise, classiquement, dans ce qui précède et ce qui suit, qu'il s'agit de l'électrode qui fait office de cathode, quand le générateur débite du courant (c'est-à-dire lorsqu'il est en processus de décharge) et qui fait office d'anode lorsque le générateur est en processus de charge.

Comme matériaux d'insertion du sodium susceptibles de constituer un matériau actif d'électrode positive, on peut citer :

- un matériau du type oxyde sodié comprenant au moins un élément métallique de transition ;
- un matériau du type phosphate ou sulfate sodié comprenant au moins un élément métallique de transition ;
- un matériau du type fluorure sodié ; ou
- un matériau du type sulfure comprenant au moins un élément métallique de transition.

Comme exemples de composés oxydes sodiés comprenant au moins un élément métallique de transition, on peut citer des oxydes simples ou des oxydes mixtes (c'est-à-dire des oxydes comprenant plusieurs éléments métalliques de transition distincts) comprenant au moins un élément métallique de transition, tels que des oxydes comprenant du nickel, du cobalt, du manganèse, du chrome, du titane, du fer et/ou de l'aluminium (ces oxydes pouvant être des oxydes mixtes).

Plus spécifiquement, comme oxydes mixtes comprenant du nickel, du cobalt, du manganèse et/ou de l'aluminium, on peut citer les composés de formule (VII) suivante :

$$NaM^2O_2 \qquad (VII)$$

dans laquelle $M^2$ est un élément choisi parmi Ni, Co, Mn, Al et les mélanges de ceux-ci.

A titre d'exemples de tels oxydes, on peut citer les oxydes sodiés $NaCoO_2$, $NaNiO_2$ et les oxydes mixtes $Na(Ni,Co,Mn)O_2$ (tel que $Na(Ni_{1/3}Mn_{1/3}Co_{1/3})O_2$), $Na(Ni,Co,Al)O_2$ (tel que $Na(Ni_{0.8}Co_{0.15}Al_{0,05})O_2$) ou $Na(Ni,Co,Mn,Al)O_2$.

Comme exemples de composés phosphates sodiés comprenant au moins un élément métallique de transition, on peut citer les composés de formule $NaM^1PO_4$, $Na_3M^1{}_2(PO_4)_3$, $Na_4M^1{}_3(PO_4)_2P_2O_7$, où $M^1$ est choisi parmi Fe, Mn, Ni, Ti, V, Mo, Co et les mélanges de ceux-ci, tel que $NaFePO_4$.

Le matériau à base de sodium peut être, également, choisi parmi :

- les fluorophosphates de sodium, tels que :

  *les fluorophosphates de formule $Na_2XPO_4F$, dans laquelle X est un élément choisi parmi Fe, Mn, Ni, Ti, V, Mo, Co et les mélanges de ceux-ci ;
  *les fluorophosphates de formule $Na_3X_2(PO_4)_2F_3$, dans laquelle X est un élément choisi parmi Fe, Mn, Ni, Ti, V, Mo Co et les mélanges de ceux-ci (ces composés étant également désignés par l'abréviation NVPF, lorsque X correspond au vanadium) ;

- les fluorosulfates de sodium de formule $NaT'SO_4F$, dans laquelle T' est un élément choisi parmi Fe, Mn, Co, Ni et les mélanges de ceux-ci.

Comme exemples de composés fluorures sodiés, on peut citer $NaFeF_3$, $NaMnF_3$ et $NaNiF_3$.

Enfin, comme exemples de composés sulfures, on peut citer $Ni_3S_2$, $FeS_2$ and $TiS_2$.

Outre la présence d'un matériau actif, tel que ceux définis ci-dessus, l'électrode positive peut comprendre un liant polymérique, tel que du polyfluorure de vinylidène (PVDF), un mélange carboxyméthylcellulose avec un latex du type styrène et/ou butadiène ainsi que un ou plusieurs adjuvants conducteurs de l'électricité, qui peuvent être des matériaux carbonés comme du noir de carbone.

Ainsi, d'un point de vue structural, l'électrode positive peut se présenter sous forme d'un matériau composite comprenant une matrice en liant(s) polymérique(s), au sein de laquelle sont dispersées des charges constituées par le matériau actif et éventuellement le ou adjuvants conducteurs de l'électricité, ledit matériau composite pouvant être déposé sur un collecteur de courant.

Une fois l'électrode positive traitée par un sel de sodium, elle est assemblée avec une électrode négative et l'électrolyte de sorte à former la cellule électrochimique de l'accumulateur sodium-ion.

On précise que, par électrode négative, on entend, classiquement, dans ce qui précède et ce qui suit, l'électrode qui fait office d'anode, quand le générateur débite du courant (c'est-à-dire lorsqu'il est en processus de décharge) et qui fait office de cathode, lorsque le générateur est en processus de charge.

Classiquement, l'électrode négative comprend, comme matériau actif d'électrode, un matériau apte à insérer, de manière réversible, du sodium.

En particulier, le matériau actif d'électrode négative peut être :

- un matériau carboné, tel que du carbone dur (connu sous l'appellation anglo-saxonne « hard carbon »), du graphite naturel ou artificiel ;
- un alliage de sodium, tel qu'un alliage silicium-sodium, un alliage étain-sodium, un alliage plomb-sodium, un alliage antimoine-sodium ;

- un oxyde mixte de sodium, tel que $Na_4Ti_5O_{12}$, $NaTiO_2$, un titanate de sodium et d'aluminium.

En outre, au même titre que pour l'électrode positive, l'électrode négative peut comprendre un liant polymérique, tel que du polyfluorure de vinylidène (PVDF), un mélange carboxyméthylcellulose avec un latex du type styrène et/ou butadiène ainsi que un ou plusieurs adjuvants conducteurs de l'électricité, qui peuvent être des matériaux carbonés, comme du noir de carbone. Qui plus est, au même titre que pour l'électrode positive, l'électrode négative peut se présenter, d'un point de vue structural, comme un matériau composite comprenant une matrice en liant(s) polymérique(s) au sein de laquelle sont dispersées des charges constituées par le matériau actif (se présentant, par exemple, sous forme particulaire) et éventuellement le ou les adjuvants conducteurs de l'électricité, ledit matériau composite pouvant être déposé sur un collecteur de courant.

L'électrolyte est quant à lui un électrolyte conducteur d'ions sodium selon la destination de l'accumulateur, et peut être, en particulier :

- un électrolyte liquide comprenant un sel de sodium dissous dans un solvant organique, tel qu'un solvant apolaire aprotique ;
- un liquide ionique ; ou
- un électrolyte solide polymère.

A titre d'exemples de sel de sodium, on peut citer $NaClO_4$, $NaAsF_6$, $NaPF_6$, $NaBF_4$, $NaRfSO_3$, $NaCH_3SO_3$, $NaN(RfSO_2)_2$, Rf étant choisi parmi F ou un groupe perfluoroalkyle comportant de 1 à 8 atomes de carbone, du trifluorométhanesulfonylimidure de sodium, du bis(oxalato)borate de sodium, du bis(perfluoréthylsulfonyl)imidure de sodium, du fluoroalkylphosphate de sodium.

A titre d'exemples de solvants organiques susceptibles d'entrer dans la constitution de l'électrolyte susmentionné, on peut citer les solvants carbonates, tels que les solvants carbonates cycliques, les solvants carbonates linéaires et les mélanges de ceux-ci.

A titre d'exemples de solvants carbonates cycliques, on peut citer le carbonate d'éthylène (symbolisé par l'abréviation EC), le carbone de propylène (symbolisé par l'abréviation PC).

A titre d'exemples de solvants carbonates linéaires, on peut citer le carbonate de diméthyle, le carbonate de diéthyle (symbolisé par l'abréviation DEC), le carbonate de diméthyle (symbolisé par l'abréviation DMC), le carbonate d'éthylméthyle (symbolisé par l'abréviation EMC).

En outre, l'électrolyte, notamment lorsqu'il est un électrolyte liquide, peut être amené à imbiber un élément séparateur, par exemple, un élément séparateur polymérique poreux, disposé entre les deux électrodes de l'accumulateur.

L'assemblage ainsi obtenu est ensuite soumis, conformément à l'invention, à une étape de première charge dans des conditions de potentiel nécessaires pour la décomposition du sel de sodium déposé à la surface de l'électrode positive, la décomposition se matérialisant par la libération des ions sodium, lesquels vont participer à la formation de la couche de passivation.

Aussi, d'un point de vue pratique, il s'entend que le sel de sodium doit pouvoir se décomposer à une fenêtre de potentiels que va balayer l'électrode positive lors de la première charge.

Ainsi, lors de la mise en œuvre de la première charge, outre le fait que l'accumulateur se charge, il s'ensuit également une réaction de décomposition du sel de sodium. Lors de cette réaction, le sel de sodium produit des ions sodium qui passent dans l'électrolyte et réagissent avec celui-ci pour former la couche de passivation au niveau des particules de matériau actif de l'électrode négative. En plus de la libération d'ions sodium, la décomposition du sel entraîne la production d'une faible quantité de composés gazeux. Ceux-ci peuvent être solubles dans l'électrolyte et peuvent, si besoin est, être éliminés lors d'une étape de dégazage.

D'autres caractéristiques et avantages de l'invention apparaîtront du complément de description qui suit et qui se rapporte à des modes de réalisation particuliers.

Bien entendu, ce complément de description n'est donné qu'à titre d'illustration de l'invention et n'en constitue en aucun cas une limitation.

## BRÈVE DESCRIPTION DES DESSINS

La figure 1 est un graphique illustrant l'évolution de la capacité C (en mAh/g) en fonction du nombre de cycles N, les résultats pour le premier accumulateur, le deuxième accumulateur et le troisième accumulateur de l'exemple concret de réalisation étant respectivement illustrés par les courbes a), b) et c).

La figure 2 est un graphique illustrant le gain relatif G(en %) en fonction du nombre de cycles N respectivement du

premier accumulateur et du deuxième accumulateur en fonction du troisième accumulateur, ces résultats étant reportés sur la courbe a pour le premier accumulateur et la courbe b pour le deuxième accumulateur.

## EXPOSÉ DÉTAILLÉ DE MODES DE RÉALISATION PARTICULIERS

Les présents exemples illustrent la préparation d'un accumulateur sodium-ion conforme à l'invention et de deux accumulateurs sodium-ion non conformes à l'invention, à savoir :

- un premier accumulateur préparé conformément au procédé de l'invention, dont l'électrode positive est revêtue préalablement à l'assemblage d'un sel de sodium ($NaN_3$) ;
- un deuxième accumulateur similaire au premier accumulateur, si ce n'est que l'électrode positive est préparée à partir d'une encre comprenant, outre les ingrédients classiques, déjà un sel de sodium ($NaN_3$) ; et
- un troisième accumulateur similaire au premier accumulateur, si ce n'est que l'électrode positive ne comporte pas de sel de sodium ($NaN_3$).

Pour le premier accumulateur, l'électrode positive est obtenue, par enduction, sur un collecteur de courant en aluminium d'une épaisseur de 20 $\mu$m, d'une encre comprenant 92% massique d'un fluorophosphate de sodium $Na_3V_2(PO_4)_2F_3$, 4% massique d'un conducteur électronique du type noir de carbone (Super C65 TIMCAL) et 4% massique d'un liant polymérique du type polyfluorure de vinylidène (solubilisé dans de la N-méthylpyrrolidone) .

L'enduction de l'encre sur le collecteur conduit à la formation d'une couche d'épaisseur 200 $\mu$m environ. Le produit résultant est ensuite placé dans un four à extraction à une température de 50°C pendant 12 heures, afin que l'eau et la N-méthylpyrrolidone résiduelles s'évaporent. Une fois sec, le produit est découpé sous forme de pastilles de diamètre 14 mm, lesquelles constituent ainsi des électrodes circulaires. Ces électrodes sont ensuite calandrées (3,25 T/cm$^2$ pendant 10 secondes) à l'aide d'une presse afin d'en diminuer la porosité.

L'électrode négative est obtenue par enduction, sur un collecteur de courant en aluminium d'épaisseur 20 $\mu$m, d'une encre comprenant 92% massique de carbone dur, 4% massique d'un conducteur électronique du type noir de carbone (Super C65 TIMCAL) et 4% massique d'un liant polymérique du type polyfluorure de vinylidène (solubilisé dans de la N-méthylpyrrolidone).

L'enduction de l'encre sur le collecteur conduit à la formation d'une couche d'épaisseur 100 $\mu$m environ. Le produit résultant est ensuite placé dans un four à extraction à une température de 50°C pendant 12 heures, afin que l'eau et la N-méthylpyrrolidone résiduelles s'évaporent. Une fois sec, le produit est découpé sous forme de pastilles de diamètre 16 mm, lesquelles constituent ainsi des électrodes circulaires. Ces électrodes sont ensuite calandrées (2,5 T/cm$^2$ pendant 10 secondes) à l'aide d'une presse afin d'en diminuer la porosité.

Avant assemblage, l'électrode positive est traitée, en déposant sur la face destinée à être en contact avec l'électrolyte, une encre comprenant 90% massique d'azoture de sodium $NaN_3$, 5% massique d'un conducteur électronique du type noir de carbone (Super C65 TIMCAL) et 5% massique d'un liant polymérique du type polyfluorure de vinylidène (solubilisé dans de la N-méthylpyrrolidone), moyennant quoi 3,5 mg de $NaN_3$ sont déposés.

Une fois l'électrode positive ainsi traitée, elle est placée avec l'électrode négative de part et d'autre d'un séparateur imbibé d'électrolyte comprenant un mélange de solvants carbonates (carbonate d'éthylène/carbonate de diméthyle) 50 :50 avec un sel de sodium $NaPF_6$ (1 mol/L).

Pour le deuxième accumulateur, celui-ci est préparé, de manière similaire, au premier accumulateur, si ce n'est que l'électrode positive est préparée, par enduction, sur un collecteur de courant en aluminium d'épaisseur 20 $\mu$m, d'une encre comprenant 69 % massique d'un fluorophosphate de sodium $Na_3V_2(PO_4)_2F_3$, 3,8% massique d'un conducteur électronique du type noir de carbone (Super C65 TIMCAL), 3,8% massique d'un liant polymérique du type polyfluorure de vinylidène (solubilisé dans de la N-méthylpyrrolidone) et 23,4% massique de $NaN_3$, moyennant quoi l'électrode positive contient 3,5 mg de $NaN_3$.

Pour le troisième accumulateur, celui-ci est préparé, de manière similaire, au premier accumulateur, si ce n'est que l'électrode positive ne subit pas de traitement de surface avec une solution comprenant de l'azoture de sodium et que l'électrode positive ne comprend pas de sel de sodium ($NaN_3$).

Le premier accumulateur, le deuxième accumulateur et le troisième accumulateur sont soumis à des tests de cyclage à un régime C/20.

Plus spécifiquement, un courant positif constant est imposé aux accumulateurs jusqu'à ce que leur tension atteigne 4,3 V (ce qui correspond à la première phase de charge). Ensuite, un courant négatif est imposé jusqu'à 2 V (ce qui correspond à la première phase de décharge). L'enchaînement de ces deux phases constitue un cycle de charge/décharge, qui est répété 5 fois.

A l'issue de chaque test, la capacité des accumulateurs (exprimée en mAh/g) est mesurée, les valeurs de capacité étant reportées sur la figure 1, illustrant l'évolution de la capacité C (en mAh/g) en fonction du nombre de cycles N, les résultats pour le premier accumulateur, le deuxième accumulateur et le troisième accumulateur étant respectivement illustrés par les courbes a), b) et c).

Il ressort, de la figure 1, que le premier accumulateur présente les meilleurs résultats. Ceci peut s'expliquer par le fait que, lors de la première charge, la couche de passivation est formée grâce aux ions sodium issus de la décomposition du sel de sodium ajoutée en surface de l'électrode et non aux ions sodium issus du matériau actif et/ou du cœur du matériau de l'électrode.

Par rapport au deuxième accumulateur, les résultats sont meilleurs, car tout le sel nécessaire à la formation de la couche de passivation a été décomposé alors, que pour le deuxième accumulateur, une partie de ce sel est non actif électrochimiquement donc perdue.

Pour ce premier accumulateur, l'intégrité physique de l'électrode positive est intacte après la première charge et le sodium du matériau actif n'est pas utilisé en partie pour la formation de la couche de passivation, d'où de meilleurs résultats en termes de capacité.

Les trois accumulateurs sont également soumis à des tests de puissance en décharge avec une décharge à différents courants (de C/20 à 10 C) et une recharge systématique à C/10. Les meilleurs résultats sont obtenus avec le premier accumulateur pour des régimes de décharge allant de 5C à 10C.

Enfin, des tests de cyclage à 1C ont été réalisés avec les trois accumulateurs, consistant à les charger et les décharger alternativement à courant constant 1C.

Les résultats ont été exploités en déterminant le gain relatif G(en %) correspondant pour un accumulateur donné à la formule suivante :

$$G= [C_n - C_3]/C_3$$

dans laquelle $C_n$ correspond à la capacité de l'accumulateur n et $C_3$ correspond à la capacité du troisième accumulateur,
en fonction du nombre de cycles N respectivement du premier accumulateur et du deuxième accumulateur en fonction du troisième accumulateur, ces résultats étant reportés sur la figure 2 (courbe a pour le premier accumulateur et courbe b pour le deuxième accumulateur).

Pour les deux courbes, on observe une augmentation du gain en fonction du nombre de cycles, ce qui atteste du caractère bénéfique de la présence du sel dans l'électrode positive avec toujours un gain supérieur pour le premier accumulateur, l'écart se situant autour de 10% à partir de 100 cycles, ce qui atteste des meilleures performances en cyclage pour le premier accumulateur.

## Revendications

1. Procédé de préparation d'un accumulateur du type sodium-ion comprenant une électrode positive et une électrode négative disposées de part et d'autre d'un électrolyte, ladite électrode positive comprenant, comme matériau actif, un matériau à base de sodium, ledit procédé comprenant les étapes suivantes :

    a) une étape de dépôt à la surface de l'électrode positive, avant placement dans l'accumulateur, d'un sel de sodium ;
    b) une étape d'assemblage de l'électrode positive, de l'électrode négative et de l'électrolyte ; et
    c) une étape de formation d'une couche de passivation à la surface de l'électrode négative avec les ions sodium issus de la décomposition du sel de sodium par application d'une première charge à l'assemblage susmentionné.

2. Procédé selon la revendication 1, dans lequel l'étape de dépôt est effectuée par une technique de jet d'encre ou d'enduction, consistant à déposer sur l'électrode positive, une composition comprenant le sel de sodium.

3. Procédé selon l'une quelconque des revendications précédentes, dans lequel le sel de sodium est choisi parmi :

    - les azotures de sodium de formule $N_3A$, avec A correspondant à un cation sodium ;
    - les cétocarboxylates de sodium, tels que ceux répondant aux formules (II) à (IV) suivantes :

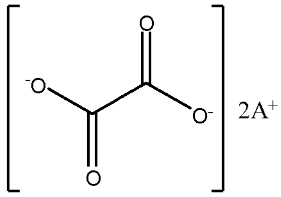

(II)

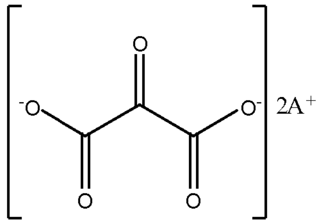

(III)

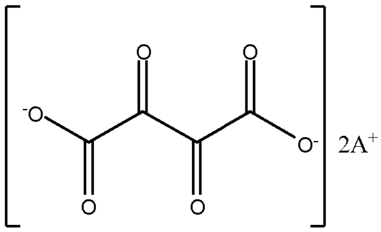

(IV)

avec A correspondant à un cation sodium ;

- les hydrazides de sodium, tels que ceux répondant aux formules (V) et (VI) suivantes :

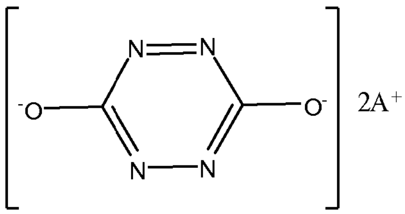

(V)

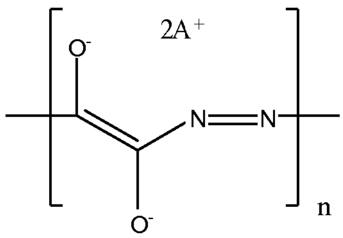

(VI)

avec A correspondant à un cation sodium et n correspondant au nombre de répétition du motif pris entre crochets.

4. Procédé selon l'une quelconque des revendications précédentes, dans lequel le sel de sodium est un azoture de sodium de formule $N_3A$, avec A correspondant à un cation sodium.

5. Procédé selon l'une quelconque des revendications précédentes, dans lequel l'électrode positive comprend, comme matériau actif :

   - un matériau du type oxyde sodié comprenant au moins un élément métallique de transition ;
   - un matériau du type phosphate ou sulfate sodié comprenant au moins un élément métallique de transition ;
   - un matériau du type fluorure sodié ; ou
   - un matériau du type sulfure comprenant au moins un élément métallique de transition.

6. Procédé selon l'une quelconque des revendications 1 à 5, dans lequel l'électrode positive comprend, comme matériau actif, un matériau choisi parmi les fluorophosphates de sodium.

7. Procédé selon l'une quelconque des revendications 1 à 6, dans lequel l'électrode positive comprend, comme matériau actif, un matériau choisi parmi les fluorophosphates de formule $Na_3X_2(PO_4)_2F_3$, dans laquelle X est un élément choisi parmi Fe, Mn, Ni, Ti, V, Mo Co et les mélanges de ceux-ci.

8. Procédé selon l'une quelconque des revendications 1 à 7, dans lequel l'électrode négative comprend, comme matériau actif :

- un matériau carboné, tel que du carbone dur (connu sous l'appellation anglo-saxonne « hard carbon »), du graphite naturel ou artificiel ;
- un alliage de sodium, tel qu'un alliage silicium-sodium, un alliage étain-sodium, un alliage plomb-sodium ; ou
- un oxyde mixte de sodium, tel que $Na_4Ti_5O_{12}$ ou $NaTiO_2$, un titanate de sodium et d'aluminium.

**9.** Procédé selon l'une quelconque des revendications précédentes, dans lequel l'électrode négative comprend, comme matériau actif, du carbone dur.

## Patentansprüche

**1.** Verfahren zur Herstellung eines Natrium-Ionen-Akkumulators, eine positive Elektrode und eine negative Elektrode umfassend, die auf beiden Seiten eines Elektrolyten angeordnet sind, wobei die positive Elektrode als aktives Material ein natriumbasiertes Material umfasst, wobei das Verfahren die folgenden Schritte umfasst:

a) einen Schritt der Ablagerung eines Natriumsalzes auf der Oberfläche der positiven Elektrode, vor der Platzierung im Akkumulator;
b) einen Schritt der Verbindung der positiven Elektrode, der negativen Elektrode und des Elektrolyten; und
c) einen Schritt der Bildung einer Passivierungsschicht auf der Oberfläche der negativen Elektrode mit den Natriumionen, die aus der Aufschließung des Natriumsalzes entstehen, durch Aufbringen einer ersten Ladung auf die Verbindung.

**2.** Verfahren nach Anspruch 1, wobei der Schritt der Ablagerung durch eine Tintenstrahl- oder Beschichtungstechnik durchgeführt wird, die darin besteht, eine Zusammensetzung, die das Natriumsalz umfasst, auf der positiven Elektrode abzuscheiden.

**3.** Verfahren nach einem der vorhergehenden Ansprüche, wobei Natriumsalz ausgewählt wird aus:

- den Natriumaziden der Formel $N_3A$, wobei A einem Natrium-Kation entspricht;
- den Natriumketocarboxylaten, wie jene, gemäß den folgenden Formeln (II) bis (IV):

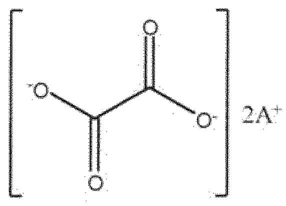

(II)

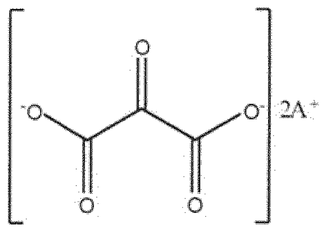

(III)

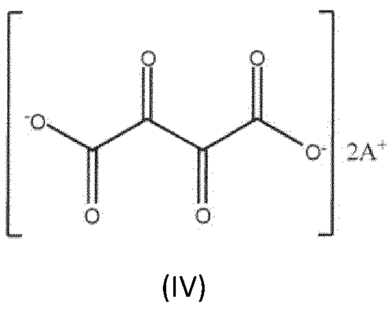

(IV)

wobei A einem Natrium-Kation entspricht;
- den Natriumhydraziden, wie jene, gemäß den folgenden Formeln (V) und (VI):

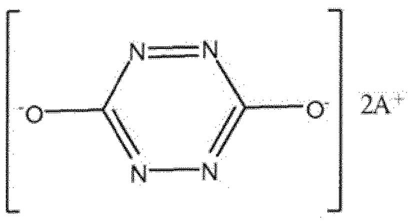

(V)

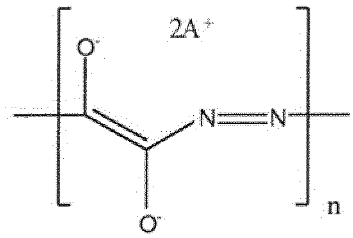

(VI)

wobei A einem Natrium-Kation entspricht und n der Anzahl der Wiederholungen der Einheit in eckigen Klammern entspricht.

4. Verfahren nach einem der vorhergehenden Ansprüche, wobei das Natriumsalz ein Natriumazid der Formel $N_3A$ ist, wobei A einem Natrium-Kation entspricht.

5. Verfahren nach einem der vorhergehenden Ansprüche, wobei die positive Elektrode als aktives Material umfasst:

- ein Material vom Typ natriumhaltiges Oxid, das mindestens ein metallenes Übergangselement umfasst;
- ein Material vom Typ natriumhaltiges Phosphat oder Sulfat, das mindestens ein metallenes Übergangselement umfasst;
- ein Material vom Typ natriumhaltiges Fluorid; oder
- ein Material vom Typ Sulfid, das mindestens ein metallenes Übergangselement umfasst.

6. Verfahren nach einem der Ansprüche 1 bis 5, wobei die positive Elektrode als aktives Material ein aus Natriumfluorophosphaten ausgewähltes Material umfasst.

7. Verfahren nach einem der Ansprüche 1 bis 6, wobei die positive Elektrode als aktives Material ein Material umfasst, das aus Fluorophosphaten der Formel $Na_3X_2(PO_4)_2F_3$ ausgewählt wurde, wobei X ein Element ist, das aus Fe, Mn, Ni, Ti, V, Mo, Co und deren Gemischen ausgewählt wurde.

8. Verfahren nach einem der Ansprüche 1 bis 7, wobei die negative Elektrode als aktives Material umfasst:

- ein kohlenstoffhaltiges Material, wie Hartkarbon (bekannt unter der englischen Bezeichnung "hard carbon") und natürlicher oder künstlicher Graphit;
- eine Natriumlegierung, wie eine Silizium-Natrium-Legierung, eine Zinn-Natrium-Legierung und eine Blei-Natrium-Legierung; oder
- ein gemischtes Natriumoxid, wie $Na_4Ti_5O_{12}$ oder $NaTiO_2$ und ein Natrium-Aluminium-Titanat.

9. Verfahren nach einem der vorhergehenden Ansprüche, wobei die negative Elektrode als aktives Material Hartkarbon umfasst.

## Claims

1. Method for preparing a sodium-ion battery comprising a positive electrode and a negative electrode arranged to either side of an electrolyte, said positive electrode comprising, as the active material, a material made from sodium, said method comprising the following steps:

a) a step of depositing a sodium salt on the surface of the positive electrode, before placing same in the battery;
b) a step of assembling the positive electrode, the negative electrode and the electrolyte; and
c) a step of forming a passivation layer on the surface of the negative electrode with the sodium ions from the decomposition of the sodium salt, by applying a first charge to the abovementioned assembly.

2. Method according to claim 1, wherein the step of depositing is carried out by an inkjet or coating technique, consisting in depositing a composition comprising sodium salt on the positive electrode.

3. Method as claimed in any preceding claim, wherein the sodium salt is chosen from:

- sodium azides of formula $N_3A$, with A corresponding to a sodium cation;
- sodium ketocarboxylates, such as those having the following formulas (II) to (IV):

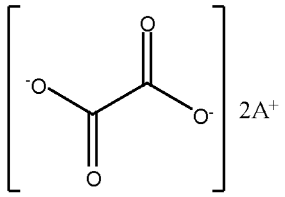

(II)

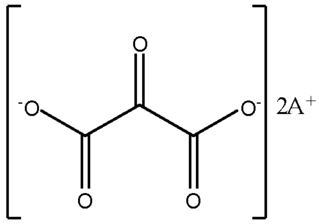

(III)

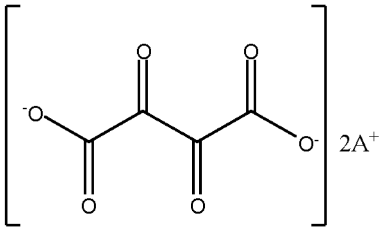

(IV)

with A corresponding to a sodium cation;
- sodium hydrazides, such as those having the following formulas (V) to (VI):

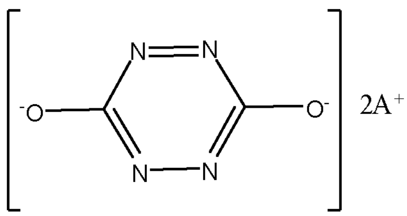

(V)

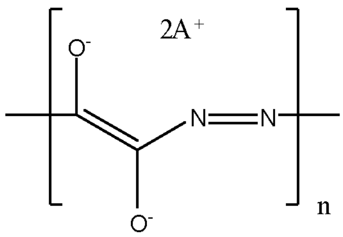

(VI)

with A corresponding to a sodium cation and n corresponding to the number of repetitions of the pattern taken between brackets.

4. Method as claimed in any preceding claim, wherein the sodium salt is a sodium azide having formula $N_3A$, with A corresponding to a sodium cation.

5. Method as claimed in any preceding claim, wherein the positive electrode comprises, as the active material:

- a material of the sodium oxide type comprising at least one transition metal element;
- a material of the phosphate or sodium sulphate type comprising at least one transition metal element;
- a material of the sodium fluoride type; or
- a material of the sulphide type comprising at least one transition metal element.

6. Method according to any of claims 1 to 5, wherein the positive electrode comprises, as the active material, a material chosen from sodium fluorophosphates.

7. Method according to any of claims 1 to 6, wherein the positive electrode comprises, as the active material, a material chosen from fluorophosphates of formula $Na_3X_2(PO_4)_2F_3$, wherein X is an element chosen from Fe, Mn, Ni, Ti, V,

Mo Co and the mixtures thereof.

**8.** Method according to any of claims 1 to 7, wherein the negative electrode comprises, as the active material:

- a carbon material, such as hard carbon, natural or artificial graphite;
- a sodium alloy, such as a silicon-sodium alloy, a tin-sodium alloy, a lead-sodium alloy; or
- a mixed sodium oxide, such as $Na_4Ti_5O_{12}$ or $NaTiO_2$, a sodium and aluminium titanate.

**9.** Method as claimed in any preceding claim, wherein the negative electrode comprises, as the active material, hard carbon.

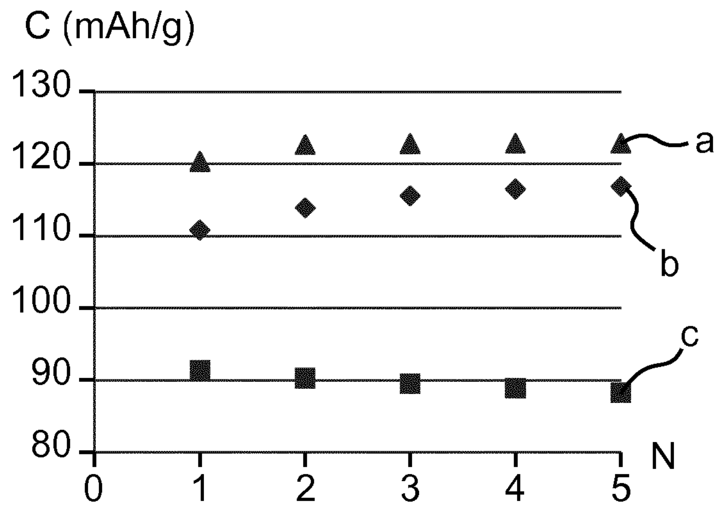
C (mAh/g)
130
120
110
100
90
80
0
1
2
3
4
5
N
a
b
c

FIG. 1

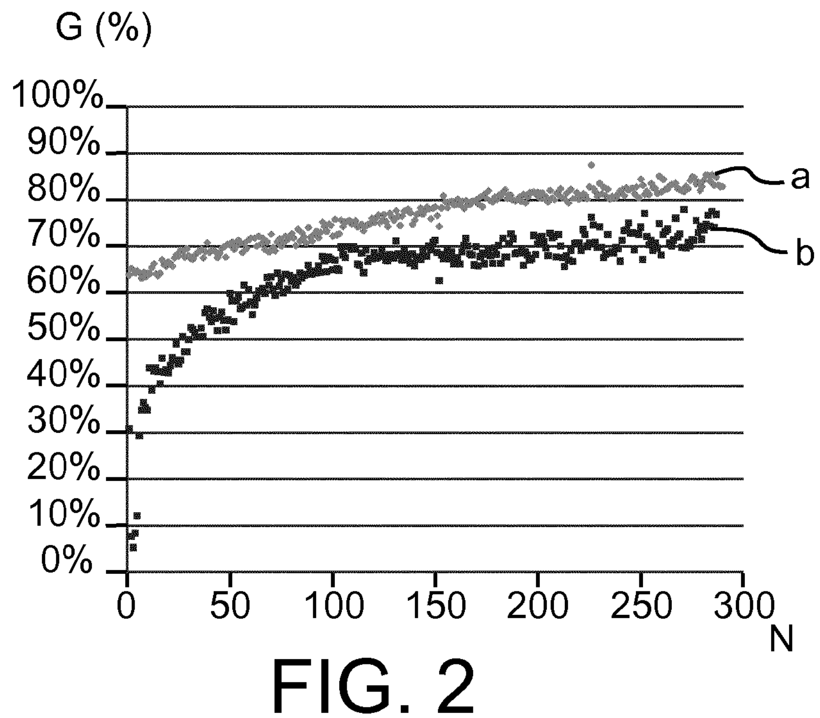
G (%)
100%
90%
80%
70%
60%
50%
40%
30%
20%
10%
0%
0
50
100
150
200
250
300
N
a
b

FIG. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 1997031401 A
- US 2013298386 A


### Littérature non-brevet citée dans la description


- *Electrochemistry Communications,* 2011, vol. 13, 664-667